# EUROPÄISCHE PATENTANMELDUNG

(11) **EP 0 887 983 A2**
(43) Veröffentlichungstag der Anmeldung: **30.12.1998**
(21) Anmeldenummer: 98111660.1
(22) Anmeldetag: 24.06.1998
(51) Int. Cl.: H04M 1/00, H04M 1/26

(54) **Teilnehmerendgerät für das ISDN**

(30) Priorität: 27.06.1997 DE 19727467
(71) Anmelder: SIEMENS AKTIENGESELLSCHAFT, 80333 München (DE)
(72) Erfinder: Födlmeier, Dieter, 84032 Altdorf (DE)

(57) **Zusammenfassung**

Es ist ein Teilnehmerendgerät für das dienste-integrierende digitale Netz (ISDN) offenbart. Das Endgerät weist eine ISDN-Teilnehmer-Steuereinrichtung, eine ISDN-Teilnehmer-Schnittstelle, eine Analog/Digital-Schnittstelle und eine Hauptsteuereinrichtung auf. Dabei ist die ISDN-Teilnehmer-Steuereinrichtung einerseits mit der ISDN-Teilnehmer-Schnittstelle und andererseits mit der digitalen Seite der Analog/Digital-Schnittstelle verbunden. Die Hauptsteuereinrichtung ist mit der Analog/Digital-Schnittstelle und der ISDN-Teilnehmer-Steuereinrichtung verbunden. Das Teilnehmerendgerät weist darüber hinaus eine Erkennungseinrichtung auf, die analoge Wählsignale erkennen kann, die an der analogen Seite der Analog/Digital- Schnittstelle eingegeben werden. Eine derartige Anordnung ermöglicht den Aufbau einer ISDN-Telefonverbindung durch Einkoppelung analoger Wählsignale in das Teilnehmerendgerät.

## Beschreibung

Die Erfindung betrifft ein Teilnehmerendgerät für das ISDN nach dem Oberbegriff von Patentanspruch 1.

ISDN ist ein Netz, das sich auch für den reinen Sprachtelefonbereich immer mehr durchsetzt. Der Verbindungsaufbau bei ISDN erfolgt jedoch grundsätzlich anders als im herkömmlichen analogen Telefonnetz. Während im analogen Telefonnetz die Signalisierung im gleichen physikalischen Kanal erfolgt, in dem bei aufgebauter Verbindung das Sprachsignal übertragen wird, steht bei ISDN ein separater digitaler logischer Kanal zur Verfügung, über den die Signalisierung zum Verbindungsauf- bzw. abbau erfolgt. Dieser Kanal wird gewöhnlich als der D-Kanal bezeichnet. Während demnach im analogen Telefonnetz die Signalisierung mittels analoger Signale erfolgt, wird dies bei ISDN mittels digitaler Signale durchgeführt. Dies erfordert Schnittstellen beim Übergang vom analogen Telefonnetz in das ISDN und umgekehrt.

Viele am Markt erhältliche Telefonzubehörsysteme sind zur Zeit noch ausschließlich für den Gebrauch im analogen Telefonnetz ausgelegt. Beispielsweise sind handliche Adreßdatenbankgeräte erhältlich, die mit einem Lautsprecher ausgestattet sind, über den bei Auswahl einer bestimmten Telefonnummer aus dem Adreßregister die den Ziffern der Telefonnummer entsprechenden Wählsignale abgegeben werden können. Wird dabei dieser Lautsprecher in die Nähe des Mikrophons eines analogen Telefongeräts gebracht, das sich im sogenannten 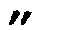 off-hook"-Zustand befindet, so werden diese Wählsignale von der an das analoge Telefongerät angeschlossene Vermittlungsstelle als Wähltöne akzeptiert, die den entsprechenden Verbindungsaufbau einleitet. Diese komfortable Wählmöglichkeit ist jedoch nur für analoge Telefonendgeräte geeignet, weil nur an diesen die Wählsignale entsprechend ausgewertet werden können. Da im ISDN die Signalisierung nicht im Übertragungskanal erfolgt, können derartige Adreßdatenbankgeräte in Verbindung mit Sprachtelefonendgeräten für das ISDN nicht eingesetzt werden.

Auf dem Gebiet der Endgeräte für das ISDN sind sogenannte Terminaladapter aus dem Produktkatalog 1997, Fa. ABC Großhandelsgesellschaft, Troisdorf, S. 150, 151 bekannt. Diese Terminaladapter dienen dazu, ein herkömmliches analoges Teilnehmerendgerät mit einer ISDN-Teilnehmerschnittstelle zu verbinden. Derartige Terminaladapter werden häufig dann eingesetzt, wenn ein Telefonteilnehmer seinen bisherigen analogen Teilnehmeranschluß zu einem ISDN-Teilnehmeranschluß aufwerten läßt, jedoch das bisher benutzte analoge Teilnehmerendgerät weiterhin benutzen möchte. Der Terminaladapter ist daher in der Lage, die vom analogen Teilnehmerendgerät kommenden Wählsignale zu erkennen, um sie als digitale Wählsignale auf dem digitalen Signalisierungskanal des ISDN abzugeben. Der eigentliche Verbindungsaufbau wird damit vom Terminaladapter durchgeführt, mit dem das analoge Teilnehmerendgerät verbunden ist.

Aus dem Stand der Technik DE 32 21 387 A1 ist ein digitales Fernsprechgerät mit Anschlüssen für analoge Zusatzgeräte bekannt. Das beschriebene Fernsprechengerät besteht aus einem Digital-/Analog Wandler der die ISDN Schnittstelle in eine a/b-Schnittstelle umsetzt und einem diesem nachgeschalteten analogen Fernsprechendgerät. Dabei handelt es sich um ein herkömmliches analoges Sprachendgerät. Die gesamte Anordnung hat dabei den Nachteil, daß die besonderen ISDN-Dienstangebote für den Anwender nicht zur Verfügung stehen. Das der Erfindung zugrundeliegende Problem besteht darin, ein Teilnehmerendgerät für das ISDN bereit zu stellen, das durch Einkoppelung analoger Wählsignale betreibbar ist.

Das Problem wird gelöst mit einem Teilnehmerendgerät mit den Merkmalen von Patentanspruch 1. Vorteilhafte Weiterbildungen dieses Teilnehmerendgeräts sind in den Unteransprüchen angegeben.

Ein bevorzugtes Teilnehmerendgerät, insbesondere ein Sprachtelefonendgerät, für das ISDN weist eine ISDN-Teilnehmer-Steuereinrichtung, eine ISDN-Teilnehmer-Schnittstelle, eine Analog/Digital-Schnittstelle und eine Hauptsteuereinrichtung auf. Die ISDN-Teilnehmer-Steuereinrichtung ist einerseits mit der ISDN-Teilnehmer-Schnittstelle und andererseits mit der digitalen Seite der Analog/Digital-Schnittstelle verbunden. Die Hauptsteuereinrichtung ist mit der Analog/Digital-Schnittstelle und mit der ISDN-Teilnehmer-Steuereinrichtung verbunden. Das Teilnehmerendgerät weist darüber hinaus eine Erkennungseinrichtung zur Erkennung analoger Wählsignale auf. Diese Wählsignale sind typischerweise an der analogen Seite der Analog/Digital-Schnittstelle eingebbar.

Ein derartiges Teilnehmerendgerät ist in der Lage, analoge Wählsignale als solche zu erkennen, um sie einer weiteren Verarbeitung zuzuführen. Das Teilnehmerendgerät für das ISDN kann damit auch mit Zubehörgeräten für ein Sprachtelefon zusammenwirken, die für ein Zusammenwirken mit einem analogen Teilnehmerendgerät konstruiert wurden.

Es wird besonders bevorzugt, daß das erfindungsgemäße Teilnehmerendgerät eine Umsetzeinrichtung aufweist, die die erkannten analogen Wählsignale in eine Nummernfolge umsetzt. Die digitale Darstellung einer derartigen Nummernfolge eignet sich dann für die Weiterverarbeitung zum Zwecke eines Verbindungsaufbaus im ISDN. Dabei wird besonders bevorzugt, daß die Hauptsteuereinrichtung den Aufbau einer ISDN-Verbindung zu demjenigen Teilnehmer veranlaßt, dessen Teilnehmerkennung der Nummernfolge entspricht.

In einer bevorzugten Ausführungsform der Erfindung ist die Erkennungseinrichtung in der Analog/Digital-Schnittstelle des Teilnehmerendgerätes enthalten. Vorzugsweise handelt es sich bei den analogen Wählsignalen um Wähltöne nach dem Zweiton-Mehrfrequenzverfahren (DTMF).

Weitere Vorteile, Merkmale und Anwendungsmöglichkeiten der Erfindung ergeben sich aus der nachfolgenden Beschreibung eines Ausführungsbeispiels in Verbindung mit der Zeichnung.

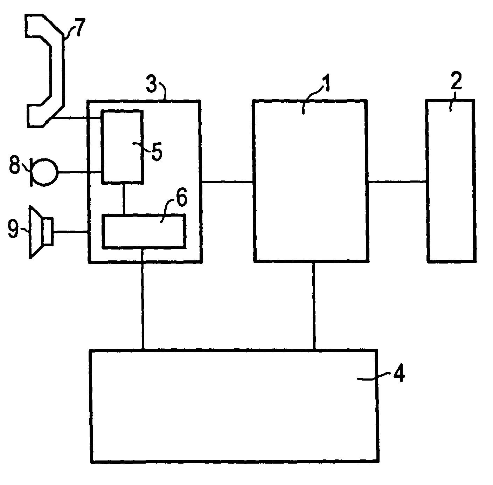

Die einzige Figur 1 der Zeichnung zeigt die Komponenten eines Sprachtelefonendgeräts für das ISDN.

Die Anordnung nach Figur 1 zeigt eine ISDN-Teilnehmer-Steuereinrichtung 1, die mit einer ISDN-Teilnehmer-Schnittstelle 2 verbunden ist. Die Steuereinrichtung 1 wird in der einschlägigen Technik auch als ISDN-subscriber-access-controller bezeichnet und ist als solche allgemein auf dem Markt erhältlich, wie zum Beispiel unter der Typenbezeichnung PSB 2186 von der Anmelderin dieser Patentanmeldung. Die Schnittstellenschaltung 2 stellt den Übergang vom physikalischen Anschluß der ISDN-Leitung zum Sprachtelefonendgerät her. Dabei handelt es sich beispielsweise um eine Schnittstelle vom Typ S oder U, wie sie im Bereich der ISDN-Technologie bekannt sind.

Die ISDN-Teilnehmer-Steuereinrichtung 1 ist darüber hinaus mit einer Analog/Digital-Schnittstelle 3 verbunden, die den Übergang von einer digitalen Signaldarstellung in eine analoge Signaldarstellung und umgekehrt ausführt. Die Funktion der Analog/Digital-Schnittstelle 3 kann beispielsweise durch einen Telefon-Chipsatz, bestehend aus einem Codec und einem DSP (digital signal processor) ausgeführt werden, wie sie beispielsweise von der Anmelderin unter der Typenbezeichnung PSB 4850 beziehungsweise PSB 4851 erhältlich sind. Die Analog/Digital-Schnittstelle 3 ist analogseitig mit den bekannten Einrichtungen eines Sprachtelefonendgeräts, wie etwa einem Telefonhörer 7, eines nicht dargestellten Gabelschalters, einer nicht dargestellten Ziffereingabevorrichtung, einem Freisprechmikrophon 8 und einem Lautsprecher 9 verbunden.

Die Analog/Digital-Schnittstelle 3 und die ISDN-Teilnehmer-Steuereinrichtung 1 sind jeweils mit einer Hauptsteuereinrichtung 4 verbunden, die die Aktivitäten der Komponenten des Sprachtelefonendgeräts insgesamt steuert. Bei der Hauptsteuereinrichtung handelt es sich typischerweise um einen Mikrocontroller, wie er beispielsweise von der Anmelderin unter der Typenbezeichnung 80C515 erhältlich ist.

Die akustischen Signale, die in den Telefonhörer 7 eingegeben werden, beziehungsweise jene, die über das Freisprechmikrophon 8 empfangen werden, werden einer Erkennungseinrichtung 5 zugeführt, die im bevorzugten Ausführungsbeispiel in der Analog/Digital-Schnittstelle 3 enthalten ist. Die Erkennungseinrichtung könnte jedoch auch in der Hauptsteuereinrichtung 4 beziehungsweise der ISDN-Teilnehmer-Steuereinrichtung 1 enthalten sein. Die von der Erkennungseinrichtung 5 erkannten Wählsignale, bei denen es sich typischerweise um Wähltöne nach dem Zweiton-Mehrfrequenzverfahren (DTMF) handelt, werden in einer Umsetzeinrichtung 6 in eine Nummernfolge umgesetzt, die die Teilnehmerkennung eines anderen Telefonnetzteilnehmers, sei es im analogen Telefonnetz oder im ISDN-Telefonnetz, darstellt. Die Umsetzeinrichtung 6 übermittelt die erhaltene Nummernfolge an die Hauptsteuereinrichtung 4, die anhand der Nummernfolge die ISDN-Teilnehmer-Steuereinrichtung 1 veranlaßt, einen Wählvorgang im ISDN einzuleiten. Der Wählvorgang erfolgt, wie allgemein bekannt, über den logischen D-Kanal des ISDN-Anschlusses.

Die Anordnung ist ferner mit einer Logik ausgestattet, die die Erkennungseinrichtung 5 und die Umsetzeinrichtung 6 aktivieren und deaktivieren kann. Typischerweise sind analoge Wählsignale nur im Zustand 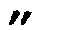 off-hook" zu erwarten. Da die Hauptsteuereinrichtung 4 die verschiedenen möglichen Zustände des Sprachtelefonendgeräts überwacht, übernimmt diese auch die Funktion des Aktivierens beziehungsweise Deaktivierens der Erkennungseinrichtung 5 und der Umsetzeinrichtung 6. Nach erfolgtem Verbindungsaufbau können die Erkennungseinrichtung 5 und die Umsetzeinrichtung 6 deaktiviert werden, weil in diesem Zustand typischerweise keine analogen Wählsignale mehr zu erwarten sind.

Mit der erfindungsgemäßen Anordnung ist es möglich, mit einem ISDN-Teilnehmerendgerät durch Eingabe analoger Wählsignale, wie etwa DTMF-Wähltönen, eine Verbindungswahl durchzuführen. Damit ist auch der Gebrauch von Telefonzubehör, das für die Benutzung in Verbindung mit analogen Telefongeräten konstruiert ist, in Verbindung mit einem ISDN-Teilnehmerendgerät möglich. Der Gebrauch kann dabei auf die übliche und dem Anwender vertraute Weise erfolgen. Er muß nicht auf die Verwendung eines herkömmlichen analogen Sprachtelefonendgeräts zurückgreifen, das bei der Anbindung an einen ISDN-Anschluß weitere Vorkehrungen, wie etwa einen Terminaladapter, erforderlich macht, was die Anzahl der Komponenten erhöht und dabei die besonderen ISDN-Dienstangebote für den Anwender unmöglich macht.

## Patentansprüche

1. Teilnehmerendgerät für das dienste-integrierende digitale Netz (ISDN) mit einer ISDN-Teilnehmer-Steuereinrichtung (1), die einerseits mit einer ISDN-Teilnehmer-Schnittstelle (2) und andererseits mit der digitalen Seite einer Analog/Digital-Schnittstelle (3) verbunden ist, und einer Hauptsteuereinrichtung (4), die mit der Analog/Digital-Schnittstelle (3) und der ISDN-Teilnehmer-Steuereinrichtung (1) verbunden ist,
**gekennzeichnet durch**
eine Erkennungseinrichtung (5) zur Erkennung von analogen Wählsignalen, die an der analogen Seite der Analog/Digital-Schnittstelle (3) eingebbar sind und
eine Umsetzeinrichtung (6), die die erkannten analogen Wählsignale in eine Nummernfolge umsetzt.

2. Teilnehmerendgerät nach Patentanspruch 1,
**dadurch gekennzeichnet,** daß
die Hauptsteuereinrichtung (4) den Aufbau einer ISDN-Verbindung zu dem Teilnehmer veranlaßt, dessen Teilnehmerkennung der Nummernfolge entspricht.

3. Teilnehmerendgerät nach einem der vorhergehenden Patentansprüche,
**dadurch gekennzeichnet,** daß
die Erkennungseinrichtung (5) in der Analog/Digital-Schnittstelle (3) enthalten ist.

4. Teilnehmerendgerät nach einem der vorhergehenden Patentansprüche,
**dadurch gekennzeichnet,** daß
die analogen Wählsignale nach dem Zweiton-Mehrfrequenzverfahren erzeugte Wähltöne sind.
